# EUROPÄISCHE PATENTSCHRIFT

(11) **EP 4 009 683 B1**
(45) Veröffentlichungstag und Bekanntmachung des Hinweises auf die Patenterteilung: **06.09.2023**
(21) Anmeldenummer: 21209439.5
(22) Anmeldetag: 20.11.2021
(51) Int. Cl.: H04W 12/065, H04W 56/00

(54) **VERFAHREN ZUR SYNCHRONISATION VON UHREN VON MINDESTENS ZWEI GERÄTEN**
METHOD FOR SYNCHRONISATION OF CLOCKS OF AT LEAST TWO DEVICES
PROCÉDÉ DE SYNCHRONISATION DES HORLOGES D'AU MOINS DEUX APPAREILS

(30) Priorität: 07.12.2020 DE 102020215441
(43) Veröffentlichungstag der Anmeldung: 08.06.2022
(73) Patentinhaber: VOLKSWAGEN AG, 38440 Wolfsburg (DE)
(72) Erfinder: Elberich, Jürgen, 42277 Wuppertal (DE); Varghese, Rijo, 44803 Bochum (DE); Matheswaran, Arul, 44623 Herne (DE)

(56) Entgegenhaltungen:
- EP-A1- 2 395 404
- WO-A1-2017/036768
- DE-A1-102014 214 823

## Beschreibung

Die Erfindung betrifft ein Verfahren zur Synchronisation von Uhren von mindestens zwei Geräten, insbesondere Steuergeräten, in einem verteilten Netzwerk eines Fahrzeuges. Zudem betrifft die Erfindung ein entsprechendes Computerprogrammprodukt zum Durchführen eines solchen Verfahrens, wenn ausgeführt auf einem Prozessor einer Steuereinheit des Fahrzeuges. Ferner betrifft die Erfindung ein entsprechendes Netzwerk für ein Fahrzeug. Außerdem betrifft die Erfindung ein korrespondierendes Fahrzeug mit einem entsprechenden Netzwerk. Moderne Fahrzeuge umfassen oft mehrere Geräte, wie z. B. Steuergeräte, die die elektronische Steuerung von Fahrerassistenzsystemen, Sicherheitssystemen, Komfortfunktionen usw. übernehmen. Die Steuergeräte empfangen Signale von Sensoren und Bedienelementen von unterschiedlichen Fahrzeugvorrichtungen, werten diese Signale aus und steuern die Fahrzeugvorrichtungen an, um bestimmte Funktionen einzuleiten. Manche Funktionen im Fahrzeug erfordern ein gleichzeitiges Ansteuern von mehreren Fahrzeugvorrichtungen, wie z. B. einer Vorfeldbeleuchtung und einer Klimaanlage, um bspw. das Fahrzeug auf eine Inbetriebnahme vorzubereiten; eines Zugangskontrollsystems und entsprechender Präsenzerfassungssensoren und/oder Bewegungserfassungssensoren; einer Motorsteuerung und Sensoren für Motordruck, Drehzahlen oder Temperaturen usw. In solchen Fällen ist es erforderlich, dass die Signale von verschiedenen Sensoren synchron abgefragt werden. Aus diesem Grund ist es notwendig, dass die Uhren von den mehreren Steuergeräten synchronisiert sind. Dabei muss sichergestellt werden, dass die Synchronisation authentisch im Hinblick auf die Cybersicherheit ist. Verfahren zur Synchronisation von Uhren von mehreren Geräten erfordern zumeist einen Austausch von mehreren Nachrichten zwischen den Steuergeräten. In Systemen mit einer langsamen und/oder einer Kryptographie mit schlecht vorhersehbaren Durchlaufzeiten ist eine individuelle Authentifizierung von den einzelnen Nachrichten nicht und/oder nicht schnell genug und/oder nicht sicher genug durchführbar.

Die Patentschriften EP 2 395 404 A1, WO 2017/036768 A1 und DE 10 2014 214823 A1 offenbaren Aspekte der sicheren Synchronisierung von Uhren in Kommunikationsnetzwerken.

Der Erfindung liegt daher Aufgabe zugrunde, ein verbessertes Verfahren zur Synchronisation von Uhren von mindestens zwei Geräten, insbesondere Steuergeräten, in einem verteilten Netzwerk eines Fahrzeuges zur Verfügung zu stellen, welches die obengenannten Nachteile zumindest zum Teil überwindet. Insbesondere ist es Aufgabe der Erfindung, ein verbessertes Verfahren zur Synchronisation von Uhren von mindestens zwei Geräten, insbesondere Steuergeräten, in einem verteilten Netzwerk eines Fahrzeuges bereitzustellen, welches einfach, schnell, zuverlässig und sicher durchführbar ist und welches einen geringen Rechenaufwand erfordert. Zudem ist es Aufgabe der Erfindung, ein entsprechendes Computerprogrammprodukt zum Durchführen eines solchen Verfahrens zur Verfügung zu stellen. Ferner ist es Aufgabe der Erfindung, ein entsprechendes Netzwerk für ein Fahrzeug bereitzustellen. Außerdem ist es Aufgabe der Erfindung, ein korrespondierendes Fahrzeug mit einem entsprechenden Netzwerk zur Verfügung zu stellen.

Die erfindungsgemäße Aufgabe wird gelöst durch: ein Verfahren zur Synchronisation von Uhren von mindestens zwei Geräten, insbesondere Steuergeräten, in einem verteilten Netzwerk eines Fahrzeuges nach dem unabhängigen Verfahrensanspruch, ein Computerprogrammprodukt zum Durchführen eines Verfahrens nach dem unabhängigen Computerprogrammproduktanspruch, ein entsprechendes Netzwerk für ein Fahrzeug nach dem unabhängigen Systemanspruch sowie ein Fahrzeug mit einem entsprechenden Netzwerk nach dem unabhängigen Vorrichtungsanspruch. Dabei gelten Merkmale, die im Zusammenhang mit einzelnen Aspekten der Erfindung beschrieben sind, selbstverständlich auch im Zusammenhang mit den anderen Aspekten der Erfindung und jeweils umgekehrt, sodass bezüglich der Offenbarung zu den einzelnen Erfindungsaspekten stets wechselseitig Bezug genommen wird bzw. werden kann.

Die Erfindung stellt gemäß einem ersten Aspekt bereit: ein Verfahren zur Synchronisation von Uhren (können ebenfalls als Zeitsensoren, Taktgeber und/oder Taktzähler bezeichnet werden) von mindestens zwei Geräten, insbesondere umfassend ein erstes Gerät und ein zweites Gerät, vorzugsweise in Form von Steuergeräten, bspw. in Form von Steuergeräten einzelner oder mehreren Sensoren und/oder Vorrichtungen und/oder Assistenzsysteme eines Fahrzeuges, in einem verteilten Netzwerk des Fahrzeuges, umfassend folgende Schritte, die vorzugsweise in zwei Phasen durchgeführt werden können:
(Phase 1, unverschlüsselt bzw. nicht authentifiziert, dient der Synchronisation von Uhren):
   - Aufbauen einer unverschlüsselten Kommunikation zwischen den mindestens zwei Geräten, um eine zeitliche Differenz zwischen den Uhren der mindestens zwei Geräte zu bestimmen,
      - Austauschen von Nachrichten, umfassend bspw. mindestens eine Anfrage (als eine Nachricht) vom ersten Gerät an das zweite Gerät und eine Antwort (als eine Nachricht) vom zweiten Gerät an das erste Gerät oder mehrere Anfragen und Antworten, zwischen den mindestens zwei Geräten über die unverschlüsselte Kommunikation,
         wobei insbesondere die Nachrichten zur Synchronisation von Uhren der mindestens zwei Geräte, z. B. nach Maßgabe des Algorithmus von Cristian, dienen,
         und/oder wobei vorzugsweise die Nachrichten mit Zeitstempeln zum Berechnen von Umlaufzeiten bzw. Round-Trip-Zeiten zwischen einem Aussenden einer Anfrage und einem Erhalten einer korrespondierenden Antwort versehen werden,

      - insbesondere Bestimmen einer Umlaufzeit bzw. einer Round-Trip-Zeit eines Nachrichtenpaares von den Nachrichten, vorzugsweise eines geeigneten Nachrichtenpaares, dessen Umlaufzeit vorzugsweise einer gewünschten Genauigkeit für die Synchronisation entspricht,
      - Ermitteln einer zeitlichen Differenz (kann auch als ein Offset bezeichnet werden) zwischen den Uhren der mindestens zwei Geräte mithilfe der Nachrichten, insbesondere mithilfe der bestimmten Umlaufzeit, vorzugsweise des geeigneten Nachrichtenpaares, bspw. am ersten Gerät von den mindestens zwei Geräten, welches z. B. zuerst aktiviert wird, (und/oder am zweiten Gerät);
(Phase 2, verschlüsselt, dient einer nachträglichen Authentifizierung der Synchronisation):
   - Aufbauen einer verschlüsselten Kommunikation zwischen den mindestens zwei Geräten, um den Austausch von Nachrichten zu authentifizieren,
      - Authentifizieren der Nachrichten, die zum Ermitteln der zeitlichen Differenz verwendet wurden, insbesondere die bis zum Ermitteln der zeitlichen Differenz ausgetauscht wurden, vorzugsweise durch Austauschen und Vergleichen von Hashwerten für die gesendeten Nachrichten und/oder empfangenen Nachrichten an den mindestens zwei Geräten,
         wobei insbesondere die Hashwerte auf den mindestens zwei Gräten für die gesendeten Nachrichten und/oder empfangenen Nachrichten gemeinsam oder separat abgebildet, ausgetauscht und/oder verglichen werden, vorzugsweise über die verschlüsselte Kommunikation oder immer noch über die unverschlüsselte Kommunikation,
      - Verwenden der ermittelten zeitlichen Differenz als Synchronisationsergebnis durch mindestens ein von den mindestens zwei Geräten oder durch beide Geräte,
      wenn die Authentifizierung von ausgetauschten Nachrichten erfolgreich abgeschlossen wurde.

Im Rahmen der Erfindung ist es denkbar, dass jedes Gerät von den mindestens zwei Geräten die zeitliche Differenz selbst ermitteln kann. Hierzu kann ferner vorgesehen sein, dass die ermittelte zeitliche Differenz zwischen den mindestens zwei Geräten, vorzugsweise über die verschlüsselte Kommunikation, ausgetauscht wird.

Auch ist es denkbar, dass nur ein Gerät, welches bspw. zuerst aktiv ist, als ein zentrales Steuergerät (sog. Zeitserver) die zeitliche Differenz ermitteln kann. Hierzu kann ferner vorgesehen sein, dass die berechnete zeitliche Differenz (dt) von diesem Gerät, welches die zeitliche Differenz ermittelt hat, an das andere Gerät von den mindestens zwei Geräten, vorzugsweise über die verschlüsselte Kommunikation, übermittelt wird. Wenn das zentrale Steuergerät als das erste Gerät bezeichnet wird, kann im Rahmen der Erfindung mindestens ein weiterer Schritt vorgesehen sein:
- Übermitteln der ermittelten zeitlichen Differenz von dem ersten Gerät an das zweite Gerät von den mindestens zwei Geräten, vorzugsweise über die verschlüsselte Kommunikation.

Die Schritte des erfindungsgemäßen Verfahrens, insbesondere innerhalb der einzelnen Phasen, können in der vorgegebenen oder in einer abgeänderten Reihenfolge durchgeführt werden. Vorteilhafterweise können die Schritte des erfindungsgemäßen Verfahrens zumindest zum Teil simultan, versetzt zueinander oder nacheinander durchgeführt werden. Vorzugsweise können die Schritte des erfindungsgemäßen Verfahrens, insbesondere umfassend beide Phasen, wiederholend durchgeführt werden, um wiederkehrende Synchronisation der Uhren zu ermöglichen. Beispielsweise kann das Verfahren periodisch und/oder in regelmäßigen Zeitabständen durchgeführt werden.

Unter einer Authentifizierung im Sinne der Erfindung ist ein Nachweis (bzw. Verifizierung) gemeint, dass die Nachricht von einem berechtigten Absender gekommen ist und dass die Nachricht nicht verfälscht ist. Das erste Gerät kann dem zweiten Gerät seine Echtheit bekunden. Das zweite Gerät kann daraufhin dem ersten Gerät die behauptete Echtheit bezeugen bzw. bestätigen. Der verfahrenstechnische Vorgang bei der Authentifizierung kann im Sinne der Erfindung als ein Authentifizieren bezeichnet werden.

Ein möglicher Algorithmus zur Synchronisation von Uhren, wie z. B. der Algorithmus von Cristian, für die Phase 1 beruht auf einem Austausch von Nachrichten. Jede Nachricht enthält einen Zeitstempel. Durch Vergleich der Zeitstempel (und/oder der Ankunfts- und/oder Absendezeitpunkte) der Nachrichten wird die relative zeitliche Differenz zwischen den Uhren berechnet. Diese zeitliche Differenz ist das Synchronisationsergebnis. Jede Nachrichtenaustausch weist eine gewisse Verzögerung, eine sog. Round-Trip-Time, auf, um von dem absendenden Gerät in Form einer Anfrage zum Ziel und von dem Ziel in Form einer Antwort wieder zurück zu gelangen. Die Anfragen und die Antworten im Sinne der Erfindung können einen gleichen Inhalt oder unterschiedliche Inhalte aufweisen. Die Round-Trip-Time kann weiterhin einen gewissen Jitter (engl. für "Fluktuation" oder "Schwankung") aufweisen, der ebenfalls als das zeitliche Taktzittern bei der Übertragung von Digitalsignalen bezeichnet werden kann. Das kann vorteilhafterweise bei der Auswertung berücksichtigt werden. Um eine ungleiche Laufgeschwindigkeit der Uhren auszugleichen, im Folgenden auch als Taktdrift bezeichnet, kann die einmal hergestellte Synchronisation überwacht und von Zeit zu Zeit aktualisiert werden.

Bei der Synchronisation werden vorteilhafterweise nicht nur eine Anfrage und eine Antwort versendet, sondern mehrere Anfragen und mehrere Antworten. Von den mehreren Anfragen und korrespondieren Antworten wird nach dem Verfahren von Christian ein solches Nachrichtenpaar abgewartet und ausgewählt, welches eine gewünschte Umlaufzeit aufweist, die unter einem bestimmten Schwellenwert liegt. Durch Bestimmen dieses Schwellenwertes wird eine gewünschte Genauigkeit für die Synchronisation festgelegt. Die erträgliche Wartezeit und dann die akzeptable Umlaufzeit ist eine Frage der gewünschten Präzision, des Systemwissens und der Statistik.

Um die Zeitsynchronisation vor Manipulationen zu schützen, kann die gesamte Nachrichtensequenz authentifiziert werden. Erfindungsgemäß erfolgt die Authentifizierung nachträglich in Phase 2, nachdem das Ergebnis bzw. das Synchronisationsergebnis in Phase 1 erhalten wurde.

Der Erfindungsgedanke liegt dabei darin, dass der Austausch von Nachrichten (Anfragen oder Antworten) zunächst nicht authentifiziert erfolgt. Jedes Gerät zeichnet auf, welche Nachrichten es sendet und welche Nachrichten es empfängt. Schließlich wird der Zeitversatz der Uhren aus dem Austausch der Nachrichten abgeleitet. Dann bauen die Geräte eine authentifizierte Kommunikation auf. Auf diese Weise werden die, vorzugsweise alle, vorherigen Nachrichten anhand der Aufzeichnungen gegenseitig bestätigt bzw. auf deren Integrität geprüft und somit authentifiziert. Falls die Authentifizierung erfolgreich ist, wird der resultierende Offset zur Synchronisation verwendet. Schlägt die Authentifizierung fehl, wird das Ergebnis verworfen. In diesem Fall kann das Verfahren wiederholt werden.

Mit anderen Worten liegt der Erfindungsgedanke darin, dass die Nachrichten, die zur Synchronisation verwendet werden, während der Synchronisation nicht verschlüsselt werden. Es wird nur eine Ex-post-facto-Authentifizierung verwendet, um die vorherige Kommunikation zu validieren. Dadurch wird die Synchronisation selbst nicht durch den Overhead an Authentifizierung gestört. Da es für die Abbildung auf die Hashwerte die Anzahl an Nachrichten nahezu unwichtig ist, kann die nachträgliche Authentifizierung aller Nachrichten, die für die Synchronisation verschickt wurden, sehr schnell, einfach und mit wenig Rechenaufwand durchgeführt werden.

Die Hashwerte können vorteilhafterweise jeweils für alle gesendeten und für alle empfangenen Nachrichten auf jedem Gerät einzeln oder gemeinsam gebildet werden. Auf diese Weise kann die gesamte Kommunikation auch gegen einen Angriff durch Wiederholung zuvor aufgezeichneter Nachrichten (engl. "replay attack", resp. "replay protection") geschützt werden. Die Kommunikation ist mit der Authentifizierung gegen einen Angriff durch einen nicht autorisierten Mittelsmann (engl. "man in the middle attack") geschützt. Auf jedem Gerät werden ein gemeinsamer Hashwert für alle gesendeten und für alle empfangenen Nachrichten oder zwei separate Hashwerte jeweils für alle gesendeten und für alle empfangenen Nachrichten berechnet. Die Hashwerte für alle ausgesendeten Nachrichten und/oder für alle empfangenen Nachrichten werden, vorteilhafterweise verschlüsselt oder auch unverschlüsselt, von einem Gerät an ein anderes Gerät geschickt, wo der oder die empfangene(n) Hashwert(e) mit dem oder den korrespondierenden lokal berechneten Hashwert(en) für alle empfangenen Nachrichten und/oder für alle ausgesendeten Nachrichten verglichen wird. Stimmen die korrespondierenden Hashwerte überein, kann die Authentifizierung als erfolgreich bezeichnet werden. Wenn die Authentifizierung fehlschlägt, kann das Verfahren wiederholt werden.

Der wesentliche Vorteil besteht darin, dass die Authentifizierung von Nachrichten von dem technischen Verfahren der Synchronisation getrennt wird. Dies ist möglich, weil eine Verarbeitung einer betrügerischen Nachricht an sich keinen Schaden anrichten würde. Nur das Ergebnis zu akzeptieren, würde einen Schaden nach sich ziehen können. Die Authentifizierung arbeitet als Gatekeeper. Sie benötigt zusätzliche Zeit, stört aber nicht die vorherige Aushandlung der Synchronisation. Die kleine Verzögerung für die Authentifizierung bei der nachträglichen Verwendung eines vertrauenswürdigen Ergebnisses ist vernachlässigbar klein.

Ferner kann es bei einem Verfahren zur Synchronisation von Uhren von mindestens zwei Geräten vorteilhaft sein, dass die berechnete zeitliche Differenz verworfen wird, wenn die Authentifizierung fehlgeschlagen ist. Auf diese Weise können die manipulativen Ergebnisse einfach und schnell aussortiert werden. Die Cybersicherheit bei der Synchronisation von Uhren kann dadurch sichergestellt werden.

Weiterhin kann es bei einem Verfahren zur Synchronisation von Uhren von mindestens zwei Geräten vorteilhaft sein, dass das Verfahren neu gestartet wird, wenn die Authentifizierung fehlgeschlagen ist. Somit kann die Synchronisation von Uhren trotz eventueller versuchter Cyberabgriffe durchgeführt werden.

Des Weiteren kann es vorteilhaft sein, wenn das Verfahren periodisch, d. h. in bestimmten Zeitabständen, bspw. wöchentlich, monatlich oder jährlich, und/oder regelmäßig, d. h. verbunden mit bestimmten Ereignissen, wie z. B. nach jedem Motorstart, nach einer bestimmten Zeit und/oder einer Kilometerzahl, im Rahmen einer Inspektion, nach einem Update mindestens eines Geräts usw., durchgeführt wird. Das Verfahren ist somit in der Lage, die Taktdrift der Uhren auszugleichen. Mithin kann die Synchronisation überwacht und von Zeit zu Zeit aktualisiert werden.

Zudem kann es vorteilhaft sein, wenn das Verfahren auf Wunsch eines Benutzers des Fahrzeuges manuell gestartet werden kann. Somit kann der Benutzer sicherstellen, dass die Uhren der Geräte synchronisiert sind und das Vertrauen ins Steuerungs- und/oder Betriebssystem des Fahrzeuges aufbauen. Dies kann auch für Situationen vorteilhaft sein, wenn neue Geräte, wie z. B. benutzerseitige Mobilgeräte, an das verteilte Netzwerk des Fahrzeuges gekoppelt werden.

Außerdem kann es von Vorteil sein, wenn das Verfahren durch das Gerät, bspw. das zuerst aktive und/oder aktivierte Gerät, von den mindestens zwei Geräten automatisch eingeleitet wird. Somit kann die Zeitsynchronisation automatisch im Netzwerk des Fahrzeuges durchgeführt werden. Denkbar ist zudem, dass das Verfahren periodisch und/oder regelmäßig automatisch eingeleitet wird. Darüber hinaus kann es vorteilhaft sein, wenn das Verfahren automatisch gestartet wird, sobald ein neues Gerät an das Netzwerk des Fahrzeuges gekoppelt wird.

Vorteilhafterweise kann das Verfahren zur Synchronisation von Uhren auch von mehr als zwei Geräten durchgeführt werden.

Zur Synchronisation von Uhren von mehr als zwei Geräten kann ein zentrales Steuergerät, ein sog. Zeitserver, von den mehr als zwei Geräten ausgewählt werden, das die Synchronisation aller Uhren, bspw. einzeln oder in Gruppe, ansteuert.

Zum einen kann ein zentrales Steuergerät die Zeitsynchronisation einzeln mit jeweils einem anderen Gerät durchführen. Dies kann für Peer-to-Peer-Netzwerke von Vorteil sein.

Zum anderen kann ein zentrales Steuergerät die lokale Zeit von mehreren sekundären Geräten ermitteln, ggf. eine gemittelte Zeit eines verteilten Systems mit diesen sekundären Geräten berechnen und als Ergebnis der Synchronisation die jeweilige Zeitdifferenz zu einer eigenen oder zur gemittelten Zeit an diese sekundären Geräten verschicken (bspw. über eine Broadcast-Verbindung oder ebenfalls Peer-to-Peer), vorausgesetzt, die bisherige Korrespondenz aus der Phase 1 erfolgreich in der Phase 2 authentifiziert wurde.

Weiterhin können andere Geräte als zweite (secondary/client) Geräte auf das erste Gerät als ein zentrales Steuergerät (primary/server) zugreifen, um sich mit dem ersten Gerät zu synchronisieren. Der Nachrichtenaustausch zwischen den jeweiligen Paaren der Geräte kann so ausgestaltet werden, dass die Berechnung des Offsets allein an den zweiten Geräten erfolgt.

Gleichwohl ist es zur Synchronisation von Uhren von mehr als zwei Geräten aber auch denkbar, dass für jeweils ein Paar von den mehr als zwei Geräten jeweils ein zentrales Steuergerät (wie oben beschrieben, kann dies sowohl ein primäres als auch ein sekundäres Steuergerät sein) ausgewählt werden kann, welches die Synchronisation einleiten und/oder ansteuern kann. Dies kann für Peer-to-Peer-Netzwerke von Vorteil sein.

Für unterschiedliche Funktionen im Fahrzeug können jeweils zwei oder mehrere Geräte erforderlich sein, die in jedem speziellen Netzwerk nach einem geeigneten Prinzip, einzeln oder in Gruppen, zeitsynchronisiert werden können.

Im Rahmen der Offenbarung ist es denkbar, dass das Verfahren zur Synchronisation von Uhren von den Geräten durchgeführt wird, die im Fahrzeug integriert sind und/oder die durch einen Benutzer mit dem verteilten Netzwerk des Fahrzeuges gekoppelt werden, wie z. B. Mobilgeräte des Benutzers. Auf diese Weise kann der verteilte Netzwerk im Fahrzeug flexibel zusammengestellt und sicher zeitsynchronisiert werden.

Darüber hinaus ist es denkbar, dass das Verfahren zur Synchronisation von Uhren von den Geräten durchgeführt wird, die für eine gewünschte Fahrzeugfunktion, vorzugsweise umfassend Sensorfunktionen, Assistenzsysteme, Sicherheitssysteme, Komfortsysteme und/oder Entertainmentsysteme, verwendet werden. Auf diese Weise kann sichergestellt werden, dass die Geräte, die für eine gewünschte Fahrzeugfunktion benötigt werden, sicher zeitsynchronisiert werden. Die Sicherheit im Betrieb des Fahrzeuges kann dadurch erheblich erhöht werden.

Ferner kann es bei einem Verfahren zur Synchronisation von Uhren von mindestens zwei Geräten vorteilhaft sein, dass die unverschlüsselte Kommunikation kabelgebunden, insbesondere über ein Bus-System, und/oder drahtlos, insbesondere über Funk, durchgeführt wird. Auf diese Weise können vorhandene Kommunikation-Möglichkeiten im System ausgenutzt werden.

Die verschlüsselte bzw. kryptographisch gesicherte Kommunikation kann wiederum mithilfe eines Verschlüsselungsprotokolls zur sicheren Datenübertragung, insbesondere Transport Layer Security, durchgeführt werden. Dadurch kann sichergestellt werden, dass die Datenübertragung sicher ist. Für das Verschlüsselungsprotokoll kann ein einmaliger individueller Schlüssel für das Fahrzeug verwendet werden. Dieser Schlüssel kann zudem zum Berechnen der Hashwerte genutzt werden. Außerdem ist es denkbar, dass für die verschlüsselte Kommunikation zum nachträglichen Authentifizieren der Zeitsynchronisierung ein spezieller Schlüssel vorgesehen sein kann. Auch kann der Schlüssel für jede Durchführung der nachträglichen Authentifizierung der Zeitsynchronisierung zwischen den mindestens zwei Geräten neu vereinbart werden.

Weiterhin kann es bei einem Verfahren zur Synchronisation von Uhren von mindestens zwei Geräten vorteilhaft sein, dass die Nachrichten zur Synchronisation von Uhren von den mindestens zwei Geräten in den mindestens zwei Geräten in einem gemeinsamen Speicher oder in jeweils zwei unterschiedlichen Speichern für gesendete Nachrichten und/oder empfangene Nachrichten gemeinsam oder separat gespeichert werden. Die Speicher können vorteilhafterweise nach jedem Durchlauf des Verfahrens geleert werden. Auf diese Weise kann die Bildung der Hashwerte für die gesendeten und/oder die empfangenen Nachrichten vereinfacht werden, wobei zum nachträglichen Authentifizieren der Zeitsynchronisierung der Inhalt der jeweiligen Speicher durch einen Hashgenerator durchgeführt werden kann.

Des Weiteren kann es bei einem Verfahren zur Synchronisation von Uhren von mindestens zwei Geräten vorteilhaft sein, dass die Nachrichten zur Synchronisation von Uhren von den mindestens zwei Geräten mit Indikatoren, bspw. in Form von Zählern, versehen werden. Auf diese Weise kann sichergestellt werden, dass die Nachrichten in einer geordneten Abfolge abspeichern werden.

Wie oben bereits erwähnt, kann es vorteilhaft sein, dass zum Authentifizieren der Nachrichten, die zum Ermitteln der zeitlichen Differenz verwendet wurden, insbesondere die bis zum Berechnen der zeitlichen Differenz ausgetauscht wurden, Hashwerte für die gesendeten Nachrichten und/oder empfangenen Nachrichten an den mindestens zwei Geräten verglichen werden. Die Bildung von Hashwerten stellt eine einfache, schnelle und ressourcensparsame Methode dar, um die Integrität der ausgetauschten Nachrichten zu überprüfen und somit sicherzustellen, dass die Nachrichten von einem berechtigten Sender gekommen sind. Mit anderen Worten kann dadurch eine einfache, schnelle und ressourcensparsame Authentifizierung der Nachrichten ermöglicht werden. Dadurch, dass die Hashwerte über die verschlüsselte Kommunikation ausgetauscht werden, um einen Vergleich der jeweiligen Hashwerte durchzuführen, kann eine zusätzliche Sicherheit vor Cyberangriffen ermöglicht werden.

Vorteilhafterweise kann jedes Gerät von den mindestens zwei Geräten alle gesendeten Nachrichten und alle empfangenen Nachrichten auf einen gemeinsamen Hashwert oder auf zwei separate Hashwerte abbilden. Bei der Bildung der Hashwerte kann ein Schlüssel benutzt werden, welcher mit einem Schlüssel für die verschlüsselte Kommunikation zwischen den mindestens zwei Geräten übereinstimmen oder welcher speziell zum Abbilden von Hashwerten ausgewählt werden kann. Auf diese Weise kann die gesamte Kommunikation bis zum Bestimmen eines geeigneten Nachrichtenpaares mit einer geeigneten Umlaufzeit einfach und schnell sowie mit wenig Rechenaufwand authentifiziert werden.

Wenn die gesendeten Nachrichten und die empfangenen Nachrichten auf einen gemeinsamen Hashwert abgebildet werden, kann zum Durchführen der Phase 2 bzw. zum Authentifizieren der verwendeten bzw. ausgetauschten Nachrichten mindestens einer der folgenden Schritte durchgeführt wird:
- Senden eines gemeinsamen Hashwertes für alle gesendeten Nachrichten und alle empfangenen Nachrichten von mindestens einem (ersten bzw. primären oder zweiten bzw. sekundären) Gerät an ein anderes Gerät (entsprechend zweites bzw. sekundäres oder erstes bzw. primäres) von den mindestens zwei Geräten, vorzugsweise über die verschlüsselte Kommunikation,
- Vergleichen des empfangenen gemeinsamen Hashwertes mit einem berechneten gemeinsamen Hashwert für alle empfangenen Nachrichten und alle gesendeten Nachrichten an dem anderen Gerät, und/oder
- Feststellen, dass die Authentifizierung erfolgreich abgeschlossen wurde, wenn der Vergleich des empfangenen gemeinsamen Hashwertes mit einem berechneten gemeinsamen Hashwert an dem anderen Gerät übereinstimmend ausgefallen ist.

Auf diese Weise kann zugleich überprüft werden, ob die jeweils gesendeten Nachrichten und die entsprechenden empfangenen Nachrichten inhaltlich übereinstimmen.

Wenn die gesendeten Nachrichten und die empfangenen Nachrichten auf zwei separate Hashwerte abgebildet werden, kann zum Durchführen der Phase 2 bzw. zum Authentifizieren der ausgetauschten Nachrichten mindestens einer der folgenden Schritte durchgeführt werden:
- Senden eines Hashwertes für alle gesendeten Anfragen, der durch das erste Gerät berechnet wurde, von dem ersten Gerät an das zweite Gerät, vorzugsweise über die verschlüsselte Kommunikation,
- Empfangen des gesendeten Hashwertes an dem zweiten Gerät,
- Vergleichen des empfangenen Hashwertes für alle gesendeten Anfragen mit einem berechneten Hashwertes für alle empfangenen Anfragen an dem zweiten Gerät.

Auf diese Weise kann überprüft werden, ob die gesendeten Anfragen vom ersten Gerät an das zweite Gerät mit den vom zweiten Gerät tatsächlich empfangenen Anfragen übereinstimmen.

Ergänzend dazu kann zum Authentifizieren der ausgetauschten Nachrichten mindestens einer der folgenden Schritte durchgeführt werden:
- Senden eines Hashwertes für alle gesendeten Antworten, der durch das zweite Gerät berechnet wurde, von dem zweiten Gerät an das erste Gerät, vorzugsweise über die verschlüsselte Kommunikation,
   wenn der Vergleich des empfangenen Hashwertes für alle gesendeten Anfragen mit dem berechneten Hashwert für alle empfangenen Anfragen an dem zweiten Gerät übereinstimmend ausgefallen ist,
- Empfangen des gesendeten Hashwertes an dem ersten Gerät,
- Vergleichen des empfangenen Hashwertes für alle gesendeten Antworten mit einem berechneten Hashwertes für alle empfangenen Antworten an dem ersten Gerät.

Auf diese Weise kann überprüft werden, um die gesendeten Antworten von dem zweiten Gerät an das erste Gerät mit den empfangenen Anfragen an dem ersten Gerät übereinstimmen.

Schließlich kann mindestens einer der folgenden Schritte durchgeführt werden:
- Feststellen, dass die Authentifizierung erfolgreich abgeschlossen wurde, wenn der Vergleich des empfangenen Hashwertes für alle ausgesendeten Antworten mit dem berechneten Hashwert für alle empfangenen Antworten übereinstimmend ausgefallen ist. Somit kann die Zeitsynchronisierung nach einer erfolgreichen Synchronisierung abgeschlossen werden und das Ergebnis der Synchronisierung, nämlich die an dem ersten Gerät berechnete zeitliche Differenz zwischen den Uhren kann danach verwendet und ggf. an das zweite Gerät übermittelt werden.

Die Erfindung stellt gemäß einem zweiten Aspekt bereit: ein Computerprogrammprodukt, umfassend Befehle, die bei der Ausführung, insbesondere des Computerprogramms, durch einen Prozessor den Prozessor veranlassen, das Verfahren durchzuführen, welches wie oben beschrieben ablaufen kann. Das Computerprogrammprodukt kann bspw. auf einem Träger, wie z. B. einer Disk oder einem anderen Träger, bereitgestellt werden. Auch kann das Computerprogrammprodukt in Form eines Updates, mit oder ohne einen Träger, für das Fahrzeug bereitgestellt werden. Mithilfe des erfindungsgemäßen Computerprogrammprodukts können die gleichen Vorteile erreicht werden, die oben im Zusammenhang mit dem erfindungsgemäßen Verfahren beschrieben wurden. Auf diese Vorteile wird vorliegend vollumfänglich Bezug genommen.

Die Erfindung stellt gemäß einem dritten Aspekt bereit: ein Netzwerk für ein Fahrzeug, umfassend mindestens zwei Geräte, wobei mindestens ein Gerät von den mindestens zwei Geräten folgende Elemente aufweist: eine Speichereinheit, in welcher ein Computerprogramm hinterlegt ist, und einen Prozessor, der so konfiguriert ist, dass der Prozessor bei der Ausführung des Computerprogramms das Verfahren durchführt, welches wie oben beschrieben ablaufen kann. Mithilfe des erfindungsgemäßen Netzwerkes können vorteilhafterweise die gleichen Vorteile erreicht werden, die oben im Zusammenhang mit dem erfindungsgemäßen Verfahren beschrieben wurden. Auf diese Vorteile wird vorliegend vollumfänglich Bezug genommen.

Die Erfindung stellt gemäß einem vierten Aspekt bereit: ein Fahrzeug mit einem Netzwerk, welches wie oben beschrieben ausgeführt sein kann. Mithilfe des erfindungsgemäßen Fahrzeuges können vorteilhafterweise die gleichen Vorteile erreicht werden, die oben im Zusammenhang mit dem erfindungsgemäßen Verfahren beschrieben wurden. Auf diese Vorteile wird vorliegend vollumfänglich Bezug genommen.

Weiterhin wird die Erfindung anhand der Figuren näher dargestellt. Dabei ist zu beachten, dass die Figuren nur einen beschreibenden Charakter haben und nicht dazu gedacht sind, die Erfindung in irgendeiner Form einzuschränken.

Es zeigen:
- Fig. 1: eine beispielhafte Kartendarstellung zum Visualisieren eines Verfahrens im Sinne der Erfindung, und
- Fig. 2: ein beispielhaftes Ablaufdiagramm eines Verfahrens im Sinne der Erfindung.

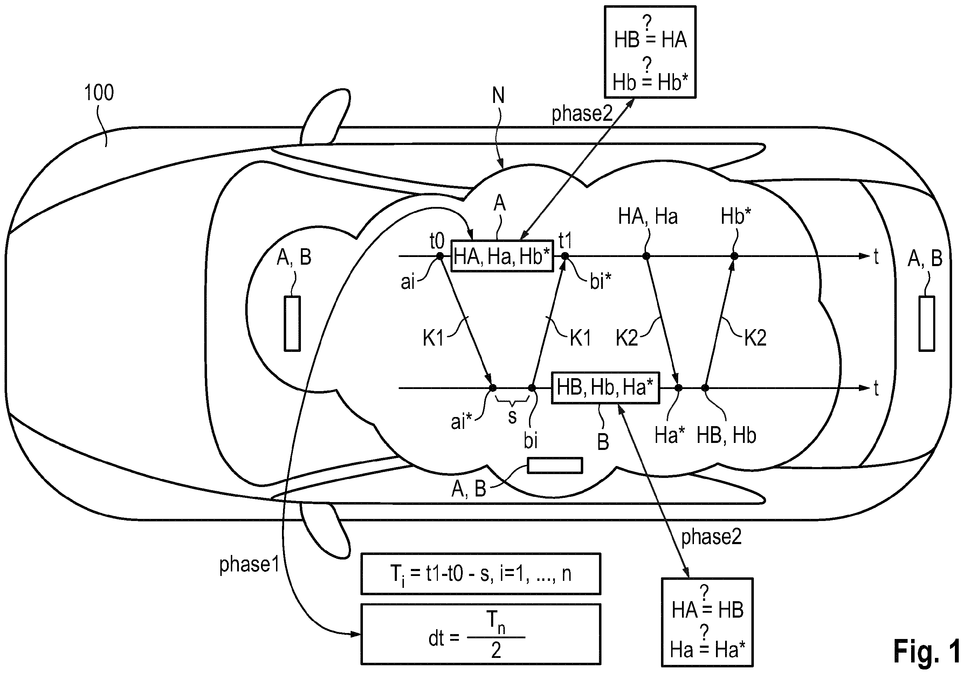

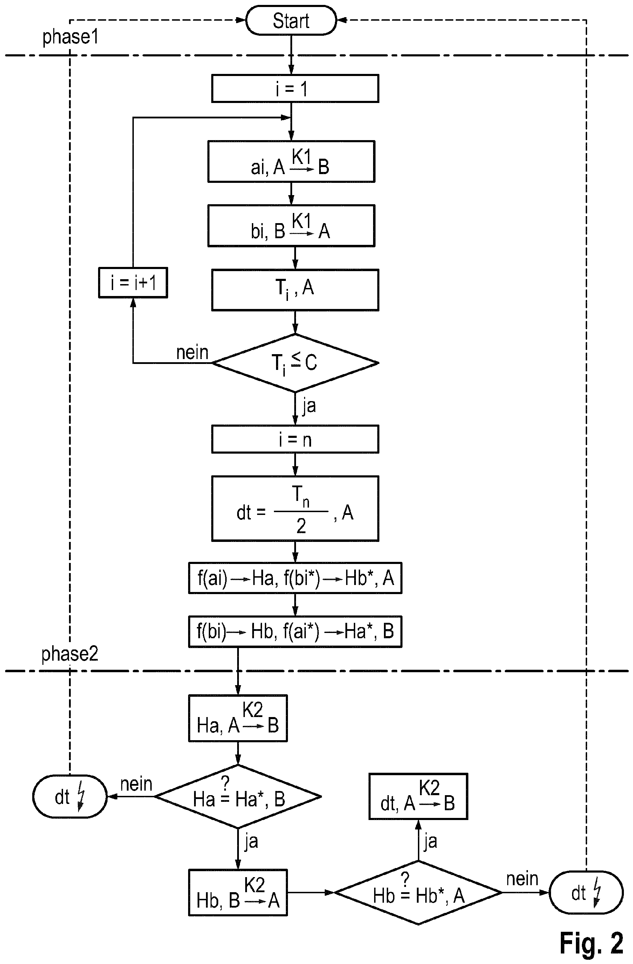

Die Figuren 1 und 2 dienen zur Veranschaulichung eines erfindungsgemäßen Verfahrens zur Synchronisation von Uhren von mindestens zwei Geräten A, B, insbesondere umfassend ein erstes Gerät A und ein zweites Gerät B, vorzugsweise in Form von Steuergeräten einzelner oder mehreren Sensoren und/oder Vorrichtungen des Fahrzeuges 100, in einem verteilten Netzwerk N eines Fahrzeuges 100. Das Verfahren kann in zwei Phasen 1, 2 durchgeführt werden: einer Phase 1 zur Synchronisation von Uhren und einer anschließenden Phase 2 zum nachträglichen Authentifizieren der Synchronisation.

Die Phase 1, die unverschlüsselt und somit nicht authentifiziert erfolgt und zur Synchronisation von Uhren dient, umfasst folgende Schritte:
- Aufbauen einer unverschlüsselten Kommunikation K1 zwischen den mindestens zwei Geräten A, B, um eine zeitliche Differenz dt zwischen den Uhren der zwei Geräte A, B zu bestimmen,
   - Austauschen von Nachrichten ai, bi, umfassend bspw. mindestens eine Anfrage ai vom ersten Gerät A an das zweite Gerät B und eine Antwort bi vom zweiten Gerät B an das erste Gerät A oder mehrere Anfragen ai und Antworten bi, zwischen den mindestens zwei Geräten A, B über die unverschlüsselte Kommunikation K1,
      wobei insbesondere die Nachrichten ai, bi zur Synchronisation von Uhren der mindestens zwei Geräte A, B, z. B. mithilfe des Algorithmus von Cristian, dienen, und/oder wobei vorzugsweise die Nachrichten ai, bi mit Zeitstempeln zum Berechnen von Umlaufzeiten Ti bzw. Round-Trip-Zeiten zwischen einem Aussenden einer Anfrage ai und einem Erhalten einer korrespondierenden Antwort bi versehen werden,
   - ggf. Bestimmen eines, vorzugsweise geeigneten, Nachrichtenpaares an, bn von den Nachrichten ai, bi mit einer Umlaufzeit Tn, die bspw. einer gewünschten Genauigkeit für die Synchronisation entspricht,
   - Ermitteln, bspw. Berechnen, einer zeitlichen Differenz dt bzw. eines Offsets zwischen den Uhren der mindestens zwei Geräte A, B mithilfe der Nachrichten ai, bi, insbesondere mithilfe der Umlaufzeit Tn des bestimmten Nachrichtenpaares an, bn, vorzugsweise an mindestens einem von den mindestens zwei Geräten A, B, bspw. an einem ersten Gerät A von den mindestens zwei Geräten A, B, welches z. B. zuerst aktiv ist, oder an jedem der mindestens zwei Geräte A, B.

Die Phase 2, die verschlüsselt erfolgt und die zu nachträglichen Authentifizierung der Synchronisation dient, umfasst folgende Schritte:
- Aufbauen einer verschlüsselten Kommunikation K2 zwischen den mindestens zwei Geräten A, B, um den Austausch von Nachrichten ai, bi zu authentifizieren,
   - Authentifizieren der Nachrichten ai, bi, die zum Ermitteln der zeitlichen Differenz dt verwendet wurden, insbesondere die bis zum Ermittelten der zeitlichen Differenz dt ausgetauscht wurden, vorzugsweise durch Austauschen und Vergleichen von Hashwerten HA, HB, Ha, Ha*, Hb, Hb* für die gesendeten Nachrichten ai, bi und/oder empfangenen Nachrichten ai*, bi* an den mindestens zwei Geräten A, B,
      wobei insbesondere die Hashwerte HA, HB, Ha, Ha*, Hb, Hb* auf den mindestens zwei Gräten A, B für die gesendeten Nachrichten ai, bi und/oder empfangenen Nachrichten ai*, bi* gemeinsam oder separat abgebildet und/oder ausgetauscht werden, vorzugsweise über die verschlüsselte Kommunikation K2 oder aber auch unverschlüsselt,
   - Verwenden der ermittelten zeitlichen Differenz dt als Synchronisationsergebnis durch mindestens ein von den mindestens zwei Geräten A, B oder durch beide Geräte A, B,
      wenn die Authentifizierung von ausgetauschten Nachrichten ai, bi erfolgreich abgeschlossen wurde.

Im Rahmen der Erfindung ist es denkbar, dass jedes Gerät A, B von den mindestens zwei Geräten A, B die zeitliche Differenz dt selbst ermitteln kann.

Es ist aber auch denkbar, dass nur ein Gerät A, B, bspw. das erste Gerät A, von den mindestens zwei Geräten A, B als ein zentrales Steuergerät (sog. Zeitserver) die zeitliche Differenz dt ermitteln kann. Im letzteren Fall kann mindestens ein weiterer Schritt vorgesehen sein:
- Übermitteln der ermittelten zeitlichen Differenz dt von dem ersten Gerät A an das zweite Gerät B von den mindestens zwei Geräten A, B, vorzugsweise über die verschlüsselte Kommunikation K2.

Die Figur 1 zeigt eine mögliche Ausführungsform der Erfindung, bei der ein Gerät in der Funktion des ersten Geräts A, welches bspw. zuerst aktiv ist, und ein Gerät in der Funktion des zweiten Geräts B agiert,.

Das erste Gerät A sendet eine Anfrage ai an das zweite Gerät B um Zeitpunkt t0. Das zweite Gerät B empfängt die Anfrage ai in Form von einer empfangenen Anfrage ai*. Das zweite Gerät B weißt noch nicht, ob die empfangene Anfrage ai* echt ist und/oder ob sie tatsächlich von dem ersten Gerät A stammt. Das zweite Gerät B sendet nach einer eventuellen Verarbeitungszeit s eine Antwort bi an das erste Gerät A. Das erste Gerät A empfängt die Antwort bi in Form von einer empfangenen Antwort bi*. Das erste Gerät A weißt noch nicht, ob die empfangene Antwort bi* echt ist und/oder ob sie tatsächlich vom zweiten Gerät B stammt.

Ein möglicher Algorithmus zur Synchronisation von Uhren in der Phase 1 ist z. B. der Algorithmus von Cristian. Jede Nachricht ai, bi wird mit einem Zeitstempel versehen, bspw. durch das aussendende Gerät und/oder durch das empfangende Gerät. Durch Vergleich der Zeitstempel und/oder der Absende- und/oder Ankunftszeitpunkte t0, t1 der Nachrichten ai, bi wird die relative zeitliche Differenz dt zwischen den Uhren von den mindestens zwei Uhren A, B berechnet. Hierzu wird die sog. Umlaufzeit Ti, wie es die Figur 1 beispielhaft zeigt, berechnet.

Diese zeitliche Differenz dt ist das Synchronisationsergebnis.

Die Anfragen ai und die Antworten bi im Sinne der Erfindung können einen gleichen Inhalt oder unterschiedliche Inhalte aufweisen.

Die Round-Trip-Time Ti kann weiterhin einen gewissen Jitter (engl. für "Fluktuation" oder "Schwankung"), sog. zeitliches Taktzittern, aufweisen. Dies kann vorteilhafterweise bei der Auswertung berücksichtigt werden. Um einen Taktdrift auszugleichen, kann die einmal hergestellte Synchronisation überwacht und von Zeit zu Zeit aktualisiert werden.

Wie es die Figur 2 andeutet, werden bei der Synchronisation nicht nur eine Anfrage ai und eine Antwort bi versendet, sondern mehrere Anfragen ai und mehrere Antworten bi. Von den mehreren Anfragen ai und korrespondieren Antworten bi wird ein solches Nachrichtenpaar an, bn abgewartet und ausgewählt, welches eine gewünschte Umlaufzeit Tn aufweist, die unter einem bestimmten Schwellenwert C liegt. Der Schwellenwert C kann je nach Fahrzeugfunktion individuell eingestellt werden. Sicherheitsrelevante Fahrzeugfunktionen können mit einem geringen Schwellenwert C gekennzeichnet werden. Entertainmentfunktionen können dagegen einen höheren Schwellenwert C erlauben.

Um das Ergebnis der Synchronisation, nämlich die zeitliche Differenz dt, vor Cyberangriffen, bspw. Man-in-the-Middle-Attacken, zu schützen, kann die gesamte Nachrichtensequenz bis zur erfolgten Synchronisation authentifiziert werden.

Im Rahmen der Erfindung erfolgt die Authentifizierung nachträglich in Phase 2, nachdem das Ergebnis das Synchronisationsergebnis in Phase 1 bereits vorliegt.

Die Erfindung sieht vor, dass der Austausch von Nachrichten ai, bi in Phase 1 nicht authentifiziert bzw. unverschlüsselt erfolgt. Jedes Gerät A, B zeichnet auf, welche Nachrichten es sendet und welche Nachrichten es empfängt. Hierzu können auf jedem Gerät A, B ein gemeinsamer Speicher oder zwei separate Speicher vorgesehen sein. Schließlich wird der Zeitversatz der Uhren aus dem Austausch der Nachrichten ai, bi abgeleitet.

Nach dem Abschluss der Phase 1 bauen die Geräte A, B in Phase 2 eine authentifizierte Kommunikation K2 auf. Auf diese Weise werden die, vorzugsweise alle, vorherigen Nachrichten ai, bi anhand der Aufzeichnungen gegenseitig bestätigt und somit authentifiziert. Falls die Authentifizierung erfolgreich ist, wird der resultierende Offset zur Synchronisation verwendet. Schlägt die Authentifizierung fehl, wird das Ergebnis verworfen. In diesem Falle kann das Verfahren wiederholt werden.

Vorteilhafterweise werden die Nachrichten ai, bi, die zur Synchronisation benötigt werden, während der Phase 1 nicht verschlüsselt. In der Phase 2 wird eine Ex-post-facto-Authentifizierung durchgeführt, um die vorherige Kommunikation K1 zu validieren.

Somit kann erreicht werden, dass die Synchronisation in der Phase 1 durch die kaum vorherzusehende Zeitverzögerung der kryptographischen Authentifizierung (auch engl. "overhead") für die einzelnen Nachrichten ai, bi nicht gestört ist.

Da für die Abbildung auf die Hashwerte HA, HB, Ha, Hb, Ha*, Hb* die Anzahl an Nachrichten ai, bi ohne Bedeutung ist, kann die nachträgliche Authentifizierung aller Nachrichten ai, bi, die in der Phase 1 verschickt wurden, sehr schnell, einfach und mit wenig Rechenaufwand durchgeführt werden. Die Hashwerte HA, HB, Ha, Hb, Ha*, Hb* werden jeweils für alle gesendeten Nachrichten ai, bi und/oder für alle empfangenen Nachrichten ai*, bi* auf jedem Gerät A, B gebildet. Auf jedem Gerät A, B werden somit ein gemeinsamer Hashwert HA, HB oder zwei separate Hashwerte Ha, Hb* oder Hb, Ha* berechnet.

In der Figur 2 ist ein mögliches Ausführungsbeispiel gezeigt, bei dem an jedem Gerät A, B zwei separate Hashwerte Ha, Hb* oder Hb, Ha* berechnet werden. In der Phase 2 wird der Hashwert Ha für alle ausgesendeten Nachrichten ai vom ersten Gerät A, bspw. bereits verschlüsselt oder immer noch unverschlüsselt, an das zweite Gerät B geschickt. Auf dem zweiten Gerät B wird der empfangene Hashwert Ha mit dem lokal berechneten Hashwert Ha* für alle empfangenen Nachrichten ai* verglichen. Stimmen die beiden Hashwerte Ha, Ha* überein, wird der Hashwert Hb für alle ausgesendeten Nachrichten bi vom zweiten Gerät B, bspw. bereits verschlüsselt oder immer noch unverschlüsselt, an das erste Gerät A geschickt. Dort wird der empfangene Hashwert Hb mit dem lokal berechneten Hashwert Hb* für alle empfangenen Nachrichten bi* verglichen. Wenn auch dieser Vergleich erfolgreich ist, kann die Authentifizierung als erfolgreich betrachtet werden. Wenn die Authentifizierung fehlschlägt, kann die berechnete zeitliche Differenz dt verworfen und/oder das Verfahren wiederholt werden.

Wie es die Figur 1 andeutet, ist es aber auch denkbar, dass an jedem Gerät A, B nur ein gemeinsamer Hashwert HA, HB für alle gesendeten Nachrichten ai, bi und/oder für alle empfangenen Nachrichten ai*, bi* berechnet wird, wobei die gesendeten Nachrichten ai, bi und/oder die empfangenen Nachrichten ai*, bi* in einer entsprechenden Reihenfolge (bspw. ai, bi* oder ai*, bi) auf dem jeweiligen Gerät A, B abgespeichert werden. In diesem Fall kann zum Authentifizieren der Nachrichten ai, bi, die der Zeitsynchronisation dienten, nur noch der gemeinsame Hashwert HA, HB gegenseitig bestätigt werden. Ein Ablauf der Authentifizierung mit dem gemeinsamen Hashwert HA, HB ist in der Figur 2 lediglich aus Einfachheitsgründen nicht gezeigt

Wie es die Figur 1 andeutet, kann das Verfahren zur Synchronisation von Uhren von mehr als zwei Geräten A, B durchgeführt werden. Hierzu kann ein zentrales Steuergerät (sog. Zeitserver) von den mehr als zwei Geräten A, B ausgewählt werden, welches die Synchronisation aller Uhren, bspw. einzeln oder gruppenweise, ansteuert. Zum einen kann ein zentrales Steuergerät die Zeitsynchronisation einzeln mit jeweils einem anderen Gerät durchführen, was für Peer-to-Peer-Netzwerke von Vorteil sein kann.

Zum anderen kann ein zentrales Steuergerät A die lokale Zeit von mehreren sekundären Geräten ermitteln und als Ergebnis der Synchronisation die jeweilige Zeitdifferenz dt zu einer eigenen oder zu einer gemittelten Zeit an diese sekundären Geräten verschicken (bspw. Broadcast oder Peer-to-Peer), vorausgesetzt, die bisherige Korrespondenz aus der Phase 1 erfolgreich in der Phase 2 authentifiziert wurde.

Im Weiteren können andere Geräte als zweite (secondary/client) Geräte B auf das erste Gerät A als ein zentrales Steuergerät (primary/server) zugreifen, um sich mit dem ersten Gerät A zu synchronisieren. Der Nachrichtenaustausch der Geräte A, B kann so ausgestaltet werden, dass die Berechnung des Offsets dt allein an den zweiten Geräten B erfolgt. Gleichwohl ist immer ein Austausch von Nachrichten erforderlich, die im Sinn der Erfindung zunächst kryptographisch ungesichert bleiben können, dann aber vor Verwendung des Synchronisationsergebnisses authentifiziert werden.

So ist es zur Synchronisation von Uhren von mehr als zwei Geräten A, B denkbar, dass für jeweils ein Paar von den mehr als zwei Geräten A, B jeweils ein zentrales Steuergerät (sog. lokaler Zeitserver) ausgewählt werden kann, um die Synchronisation einzuleiten. Dies kann für Peer-to-Peer-Netzwerke von Vorteil sein.

Für unterschiedliche Funktionen im Fahrzeug 100 können jeweils zwei oder mehrere Geräte erforderlich sein, die in jedem speziellen verteilten Netzwerk N nach einem geeigneten Prinzip, einzeln oder in Gruppen, zeitsynchronisiert werden können.

Als Geräte A, B sind insbesondere Steuergeräte einzelner oder kombinierter Vorrichtungen im Fahrzeug 100 denkbar. Als Geräte A, B kommen dabei in Frage: Geräte, die im Fahrzeug 100 integriert sind und/oder die durch einen Benutzer mit dem verteilten Netzwerk N des Fahrzeuges 100 gekoppelt werden können, wie z. B. Mobilgeräte M des Benutzers.

Vorteilhafterweise kann das Verfahren zur Synchronisation von den Geräten A, B durchgeführt werden, die für eine gewünschte Fahrzeugfunktion erforderlich sind.

Als Fahrzeugfunktionen im Sinne der Erfindung sind Sensorfunktionen, Assistenzsysteme, Sicherheitssysteme, Komfortsysteme und/oder Entertainmentsysteme denkbar.

Die unverschlüsselte Kommunikation K1 kann bspw. kabelgebunden, z. B. über ein Bus-System, und/oder drahtlos, z. B. über Funk, durchgeführt wird. Auf diese können vorhandene Kommunikation-Möglichkeiten im Fahrzeug 100 flexibel ausgenutzt werden.

Die verschlüsselte Kommunikation K2 kann wiederum mithilfe eines Verschlüsselungsprotokolls zur sicheren Datenübertragung, bspw. Transport Layer Security (TLS), durchgeführt werden.

Wie oben bereits erwähnt können die Nachrichten ai, bi zur Synchronisation von Uhren von den mindestens zwei Geräten A, B in den mindestens zwei Geräten A, B in einem gemeinsamen Speicher oder in jeweils zwei unterschiedlichen Speichern für gesendete Nachrichten ai, bi und/oder empfangene Nachrichten ai*, bi* separat gespeichert werden. Die jeweiligen Speicher können vorteilhafterweise nach jedem Durchlauf des Verfahrens geleert werden.

Die Nachrichten ai, bi können vorteilhafterweise mit Indikatoren, bspw. in Form von Zählern, versehen werden, um die Nachrichten ai, bi in einer geordneten Abfolge abspeichern zu können.

Wie es die Figur 2 verdeutlicht, kann jedes Gerät von den mindestens zwei Geräten A, B alle gesendeten Nachrichten ai, bi und alle empfangenen Nachrichten ai*, bi* auf zwei entsprechende Hashwerte Ha, Ha*, Hb, Hb* abbilden. Nicht gezeigt ist in der Figur 2 lediglich aus Einfachheitsgründen die weitere Möglichkeit, bei der alle gesendeten Nachrichten ai, bi und alle empfangenen Nachrichten ai*, bi* auf den Geräten A, B auf nur einen gemeinsamen Hashwert HA, HB je Gerät A, B abgebildet werden. Auf diese Weise kann eine sog. Perplay-Protection gewährleistet und Man-in-the-Middle-Angriffe sicher vermieden werden. Bei der Bildung von Hashwerten Ha, Ha*, Hb, Hb* kann ein Schlüssel benutzt werden, welcher mit einem Schlüssel für die verschlüsselte Kommunikation K2 zwischen den mindestens zwei Geräten A, B übereinstimmen oder welches speziell zum Abbilden von Hashwerten ausgewählt werden kann. Auf diese Weise kann die gesamte Kommunikation bis zum Bestimmen eines geeigneten Nachrichtenpaares an, bn mit einer geeigneten Umlaufzeit Tn einfach und schnell sowie mit wenig Rechenaufwand authentifiziert werden.

Wie es die Figur 2 weiterhin verdeutlicht, können zum Durchführen der Phase 2 bzw. zum Authentifizieren der ausgetauschten Nachrichten ai, bi folgende Schritte durchgeführt werden:
- Senden eines Hashwertes Ha für alle gesendeten Anfragen ai, der durch das erste Gerät A berechnet wurde, von dem ersten Gerät A an das zweite Gerät B, vorzugsweise über die verschlüsselte Kommunikation K2,
- Empfangen des gesendeten Hashwertes Ha an dem zweiten Gerät B,
- Vergleichen des empfangenen Hashwertes Ha für alle gesendeten Anfragen ai mit einem berechneten Hashwertes Ha* für alle empfangenen Anfragen ai* an dem zweiten Gerät B,
- Senden eines Hashwertes Hb für alle gesendeten Antworten bi, der durch das zweite Gerät B berechnet wurde, von dem zweiten Gerät B an das erste Gerät A, vorzugsweise über die verschlüsselte Kommunikation K2,
   wenn der Vergleich des empfangenen Hashwertes Ha für alle gesendeten Anfragen ai mit dem berechneten Hashwert Ha* für alle empfangenen Anfragen ai* an dem zweiten Gerät B übereinstimmend ausgefallen ist,
- Empfangen des gesendeten Hashwertes Hb an dem ersten Gerät A,
- Vergleichen des empfangenen Hashwertes Hb für alle gesendeten Antworten bi mit einem berechneten Hashwertes Hb* für alle empfangenen Antworten bi* an dem ersten Gerät A, und/oder
- Feststellen, dass die Authentifizierung erfolgreich abgeschlossen wurde,
   wenn der Vergleich des empfangenen Hashwertes Hb für alle ausgesendeten Antworten bi mit dem berechneten Hashwert Hb* für alle empfangenen Antworten bi* übereinstimmend ausgefallen ist.

Wenn die gesendeten Nachrichten ai, bi und die empfangenen Nachrichten ai*, bi* auf einen gemeinsamen Hashwert HA, HB abgebildet werden (vgl. Figur 1), kann zum Durchführen der Phase 2 bzw. zum Authentifizieren der Zeitsynchronisation mindestens einer der folgenden Schritte durchgeführt werden:
- Senden eines gemeinsamen Hashwertes HA oder HB für alle gesendeten Nachrichten ai, bi und alle empfangenen Nachrichten ai*, bi* von mindestens einem Gerät an ein anderes Gerät von den mindestens zwei Geräten A, B, vorzugsweise über die verschlüsselte Kommunikation K2,
- Vergleichen des empfangenen gemeinsamen Hashwertes HA oder HB mit einem berechneten gemeinsamen Hashwert HB oder HA für alle empfangenen Nachrichten ai*, bi* und alle gesendeten Nachrichten ai, bi an dem anderen Gerät, und/oder
- Feststellen, dass die Authentifizierung erfolgreich abgeschlossen wurde, wenn der Vergleich des empfangenen gemeinsamen Hashwertes HA oder HB mit einem berechneten gemeinsamen Hashwert HB oder HA an dem anderen Gerät übereinstimmend ausgefallen ist.

Ein entsprechendes Computerprogrammprodukt, umfassend Befehle, die bei der Ausführung, insbesondere des Computerprogramms, durch einen Prozessor cu den Prozessor cu veranlassen, das Verfahren durchzuführen, welches wie oben beschrieben ablaufen kann, stellt ebenfalls einen Aspekt der Erfindung dar.

Ein entsprechendes Netzwerk N für ein Fahrzeug 100, umfassend mindestens zwei Geräte A, B, wobei mindestens ein Gerät von den mindestens zwei Geräten A, B folgende Elemente aufweist: eine Speichereinheit mu, in welcher ein Computerprogramm hinterlegt ist, und einen Prozessor cu, welcher so konfiguriert ist, dass der Prozessor cu bei der Ausführung des Computerprogramms das Verfahren durchführt, welches wie oben beschrieben ablaufen kann, stellt weiterhin einen Aspekt der Erfindung dar.

Ein korrespondierendes Fahrzeug 100 mit einem Netzwerk N, welches wie oben beschrieben ausgeführt sein kann, stellt ebenfalls einen Aspekt der Erfindung dar.

Die voranstehende Beschreibung der Figur beschreibt die vorliegende Erfindung ausschließlich im Rahmen von Beispielen. Selbstverständlich können einzelne Merkmale der Ausführungsformen, sofern es technisch sinnvoll ist, frei miteinander kombiniert werden, ohne den Rahmen der Erfindung zu verlassen.

### Bezugszeichenliste

- 100: Fahrzeug

- 1: Phase
- 2: Phase

- A: Gerät
- B: Gerät
- M: Mobilgerät
- N: Netzwerk

- ai, bi: (gesendete) Nachrichten
- ai: (gesendete) Anfrage
- bi: (gesendete) Antwort

- ai*, bi*: (empfangene) Nachrichten
- ai*: (empfangene) Anfrage
- bi*: (empfangene) Antwort

- an, bn: geeignetes Nachrichtenpaar
- an: Anfrage eines geeigneten Nachrichtenpaares
- bn: Antwort eines geeigneten Nachrichtenpaares

- Ti: Umlaufzeit
- Tn: Umlaufzeit mit einer gewünschten Genauigkeit
- C: Schwellenwert

- to: Absendezeitpunkt
- t1: Ankunftszeitpunkt
- dt: zeitliche Differenz

- K1: unverschlüsselte Kommunikation
- K2: verschlüsselte Kommunikation
- HA: gemeinsamer Hashwert
- HB: gemeinsamer Hashwert

- Ha: Hashwert für alle gesendeten Anfragen
- Ha *: Hashwert für alle empfangenen Anfragen
- Hb: Hashwert für alle gesendeten Antworten
- Hb*: Hashwert für alle empfangenen Antworten

- cu: Prozessor
- mu: Speichereinheit

## Patentansprüche

1. Verfahren zur Synchronisation von Uhren von mindestens zwei Geräten (A, B) in einem verteilten Netzwerk (N) eines Fahrzeuges (100),
umfassend folgende Schritte:
- Aufbauen einer unverschlüsselten Kommunikation (K1) zwischen den mindestens zwei Geräten (A, B), um eine zeitliche Differenz (dt) zwischen den Uhren der zwei Geräte (A, B) zu bestimmen,
- Austauschen von Nachrichten (ai, bi) zwischen den mindestens zwei Geräten (A, B) über die unverschlüsselte Kommunikation (K1),
- Ermitteln einer zeitlichen Differenz (dt) zwischen den Uhren der mindestens zwei Geräte (A, B) mithilfe der Nachrichten (ai, bi),
- Aufbauen einer verschlüsselten Kommunikation (K2) zwischen den mindestens zwei Geräten (A, B), um den Austausch von Nachrichten (ai, bi) zu authentifizieren,
- Authentifizieren der Nachrichten (ai, bi), die zum Ermitteln der zeitlichen Differenz (dt) verwendet wurden,
- Verwenden der ermittelten zeitlichen Differenz (dt),
wenn die Authentifizierung von ausgetauschten Nachrichten (ai, bi) erfolgreich abgeschlossen wurde.

2. Verfahren nach Anspruch 1,
**dadurch gekennzeichnet,**
**dass** die berechnete zeitliche Differenz (dt) verworfen wird, wenn die Authentifizierung fehlgeschlagen ist,
und/oder dass das Verfahren neu gestartet wird, wenn die Authentifizierung fehlgeschlagen ist.

3. Verfahren nach einem der vorhergehenden Ansprüche,
**dadurch gekennzeichnet,**
**dass** das Verfahren periodisch und/oder regelmäßig durchgeführt wird,
und/oder dass das Verfahren auf Wunsch eines Benutzers des Fahrzeuges (100) manuell gestartet werden kann,
und/oder dass das Verfahren durch das Gerät von den mindestens zwei Geräten (A, B) automatisch eingeleitet wird, welches als erstes aktiv ist und/oder aktiviert wird.

4. Verfahren nach einem der vorhergehenden Ansprüche,
**dadurch gekennzeichnet,**
**dass** das Verfahren zur Synchronisation von Uhren von mehr als zwei Geräten (A, B) durchgeführt wird,
wobei ein zentrales Steuergerät von den mehr als zwei Geräten (A, B) ausgewählt wird, das die Synchronisation aller Uhren ansteuert,
und/oder wobei für jeweils ein Paar von den mehr als zwei Geräten (A, B) jeweils ein zentrales Steuergerät ausgewählt wird, das die Synchronisation ansteuert.

5. Verfahren nach einem der vorhergehenden Ansprüche,
**dadurch gekennzeichnet,**
**dass** das Verfahren zur Synchronisation von Uhren von den Geräten (A, B) durchgeführt wird, die im Fahrzeug (100) integriert sind und/oder die durch einen Benutzer mit dem verteilten Netzwerk (N) des Fahrzeuges (100) gekoppelt werden,
und/oder dass das Verfahren zur Synchronisation von Uhren von den Geräten (A, B) durchgeführt wird, die für eine gewünschte Fahrzeugfunktion verwendet werden.

6. Verfahren nach einem der vorhergehenden Ansprüche,
**dadurch gekennzeichnet,**
**dass** die unverschlüsselte Kommunikation (K1) kabelgebunden und/oder drahtlos durchgeführt wird,
und/oder dass die verschlüsselte Kommunikation (K2) mithilfe eines Verschlüsselungsprotokolls zur sicheren Datenübertragung durchgeführt wird.

7. Verfahren nach einem der vorhergehenden Ansprüche,
**dadurch gekennzeichnet,**
**dass** die Nachrichten (ai, bi) in den mindestens zwei Geräten (A, B) in einem gemeinsamen Speicher oder in jeweils zwei unterschiedlichen Speichern für gesendete Nachrichten (ai, bi) und/oder empfangene Nachrichten (ai*, bi*) gespeichert werden, und/oder dass die Nachrichten (ai, bi) mit Indikatoren versehen werden.

8. Verfahren nach einem der vorhergehenden Ansprüche,
**dadurch gekennzeichnet,**
**dass** zum Authentifizieren der Nachrichten (ai, bi), die zum Ermitteln der zeitlichen Differenz (dt) verwendet wurden, insbesondere die bis zum Berechnen der zeitlichen Differenz (dt) ausgetauscht wurden, Hashwerte (Ha, Ha*, Hb, Hb*) für die gesendeten Nachrichten (ai, bi) und/oder empfangenen Nachrichten (ai*, bi*) an den mindestens zwei Geräten (A, B) verglichen werden.

9. Verfahren nach einem der vorhergehenden Ansprüche,
**dadurch gekennzeichnet,**
**dass** jedes Gerät von den mindestens zwei Geräten (A, B) alle gesendeten Nachrichten (ai, bi) und alle empfangenen Nachrichten (ai*, bi*) auf einen gemeinsamen Hashwert (HA, HB) oder auf zwei separate Hashwerte (Ha, Ha*, Hb, Hb*) abbildet.

10. Verfahren nach einem der vorhergehenden Ansprüche,
**dadurch gekennzeichnet,**
**dass** zum Authentifizieren der verwendeten Nachrichten (ai, bi) mindestens der erste Schritt durchgeführt wird:
- Senden eines gemeinsamen Hashwertes (HA) für alle gesendeten Nachrichten (ai, bi) und alle empfangenen Nachrichten (ai,*, bi*) von mindestens einem Gerät an ein anderes Gerät von den mindestens zwei Geräten (A, B),
- Vergleichen des empfangenen gemeinsamen Hashwertes (HA) mit einem berechneten gemeinsamen Hashwert (HB) für alle empfangenen Nachrichten (ai,*, bi*) und alle gesendeten Nachrichten (ai, bi) an dem anderen Gerät, und/oder
- Feststellen, dass die Authentifizierung erfolgreich abgeschlossen wurde, wenn der Vergleich des empfangenen gemeinsamen Hashwertes (HA) mit einem berechneten gemeinsamen Hashwert (HB) an dem anderen Gerät übereinstimmend ausgefallen ist.

11. Verfahren nach einem der Ansprüche 1-9,
**dadurch gekennzeichnet,**
**dass** zum Authentifizieren der verwendeten Nachrichten (ai, bi) mindestens der erste Schritt durchgeführt wird:
- Senden eines Hashwertes (Ha) für alle gesendeten Anfragen (ai), der durch das erste Gerät (A) berechnet wurde, von einem ersten Gerät (A) an ein zweites Gerät (B) von den mindestens zwei Geräten (A, B),
- Empfangen des gesendeten Hashwertes (Ha) an dem zweiten Gerät (B), und/oder
- Vergleichen des empfangenen Hashwertes (Ha) für alle gesendeten Anfragen (ai) mit einem berechneten Hashwertes (Ha*) für alle empfangenen Anfragen (ai*) an dem zweiten Gerät (B).

12. Verfahren nach dem vorhergehenden Anspruch,
**dadurch gekennzeichnet,**
**dass** zum Authentifizieren der ausgetauschten Nachrichten (ai, bi) mindestens der erste Schritt durchgeführt wird:
- Senden eines Hashwertes (Hb) für alle gesendeten Antworten (bi), der durch das zweite Gerät (B) berechnet wurde, von dem zweiten Gerät (B) an das erste Gerät (A),
wenn der Vergleich des empfangenen Hashwertes (Ha) für alle gesendeten Anfragen (ai) mit dem berechneten Hashwert (Ha*) für alle empfangenen Anfragen (ai*) an dem zweiten Gerät (B) übereinstimmend ausgefallen ist,
- Empfangen des gesendeten Hashwertes (Hb) an dem ersten Gerät (A),
- Vergleichen des empfangenen Hashwertes (Hb) für alle gesendeten Antworten (bi) mit einem berechneten Hashwertes (Hb*) für alle empfangenen Antworten (bi*) an dem ersten Gerät (A), und/oder
- Feststellen, dass die Authentifizierung erfolgreich abgeschlossen wurde,
wenn der Vergleich des empfangenen Hashwertes (Hb) für alle ausgesendeten Antworten (bi) mit dem berechneten Hashwert (Hb*) für alle empfangenen Antworten (bi*) übereinstimmend ausgefallen ist.

13. Computerprogrammprodukt, umfassend Befehle, die bei der Ausführung, insbesondere des Computerprogramms, durch einen Prozessor (cu) den Prozessor (cu) veranlassen, das Verfahren nach einem der vorhergehenden Ansprüche durchzuführen.

14. Netzwerk (N) für ein Fahrzeug (100), umfassend mindestens zwei Geräte (A, B), wobei mindestens ein Gerät von den mindestens zwei Geräten (A, B) folgende Elemente aufweist:
eine Speichereinheit (mu), in welcher ein Computerprogramm hinterlegt ist,
und einen Prozessor (cu), der so konfiguriert ist, dass der Prozessor (cu) bei der Ausführung des Computerprogramms das Verfahren nach einem der vorhergehenden Ansprüche 1 bis 12 durchführt.

15. Fahrzeug (100) mit einem Netzwerk (N) nach dem vorhergehenden Anspruch.

## Claims

1. Method for synchronizing clocks of at least two devices (A, B) in a distributed network (N) of a vehicle (100),
comprising the following steps:
- setting up unencrypted communication (K1) between the at least two devices (A, B) in order to determine a time difference (dt) between the clocks of the two devices (A, B),
- exchanging messages (ai, bi) between the at least two devices (A, B) using the unencrypted communication (K1),
- determining a time difference (dt) between the clocks of the at least two devices (A, B) with the aid of the messages (ai, bi),
- setting up encrypted communication (K2) between the at least two devices (A, B) in order to authenticate the exchange of messages (ai, bi),
- authenticating the messages (ai, bi) which were used to determine the time difference (dt),
- using the determined time difference (dt),
if the authentication of exchanged messages (ai, bi) was successfully completed.

2. Method according to Claim 1,
**characterized**
**in that** the calculated time difference (dt) is rejected if the authentication has failed,
and/or in that the method is restarted if the authentication has failed.

3. Method according to one of the preceding claims, **characterized**
**in that** the method is carried out periodically and/or regularly,
and/or in that the method can be manually started at the request of a user of the vehicle (100),
and/or in that the method is automatically initiated by that device of the at least two devices (A, B) which is active and/or activated first.

4. Method according to one of the preceding claims, **characterized**
**in that** the method is carried out for the purpose of synchronizing clocks of more than two devices (A, B), wherein a central control device of the more than two devices (A, B) is selected and controls the synchronization of all clocks,
and/or wherein a central control device which controls the synchronization is respectively selected for each pair of the more than two devices (A, B).

5. Method according to one of the preceding claims, **characterized**
**in that** the method is carried out for the purpose of synchronizing clocks of the devices (A, B) which are integrated in the vehicle (100) and/or are coupled to the distributed network (N) of the vehicle (100) by a user, and/or in that the method is carried out for the purpose of synchronizing clocks of the devices (A, B) which are used for a desired vehicle function.

6. Method according to one of the preceding claims, **characterized**
**in that** the unencrypted communication (K1) is carried out in a wired and/or wireless manner,
and/or in that the encrypted communication (K2) is carried out with the aid of an encryption protocol for secure data transmission.

7. Method according to one of the preceding claims, **characterized**
**in that** the messages (ai, bi) are stored in the at least two devices (A, B) in a common memory or in two different memories in each case for transmitted messages (ai, bi) and/or received messages (ai*, bi*),
and/or in that the messages (ai, bi) are provided with indicators.

8. Method according to one of the preceding claims, **characterized**
**in that**, in order to authenticate the messages (ai, bi) which were used to determine the time difference (dt), in particular were exchanged until the time difference (dt) was calculated, hash values (Ha, Ha*, Hb, Hb*) for the transmitted messages (ai, bi) and/or received messages (ai*, bi*) are compared in the at least two devices (A, B).

9. Method according to one of the preceding claims, **characterized**
**in that** each device of the at least two devices (A, B) maps all transmitted messages (ai, bi) and all received messages (ai*, bi*) to a common hash value (HA, HB) or to two separate hash values (Ha, Ha*, Hb, Hb*).

10. Method according to one of the preceding claims, **characterized**
**in that**, in order to authenticate the messages (ai, bi) used, at least the first step is carried out:
- transmitting a common hash value (HA) for all transmitted messages (ai, bi) and all received messages (ai*, bi*) from at least one device to at another device of the at least two devices (A, B),
- comparing the received common hash value (HA) with a calculated common hash value (HB) for all received messages (ai*, bi*) and all transmitted messages (ai, bi) in the other device, and/or
- determining that the authentication has been successfully completed,
if the comparison of the received common hash value (HA) with a calculated common hash value (HB) in the other device results in a match.

11. Method according to one of Claims 1-9, **characterized**
**in that**, in order to authenticate the messages (ai, bi) used, at least the first step is carried out:
- transmitting a hash value (Ha) for all transmitted requests (ai), which was calculated by the first device (A), from a first device (A) to a second device (B) of the at least two devices (A, B),
- receiving the transmitted hash value (Ha) in the second device (B), and/or
- comparing the received hash value (Ha) for all transmitted requests (ai) with a calculated hash value (Ha*) for all received requests (ai*) in the second device (B).

12. Method according to the preceding claim, **characterized**
**in that**, in order to authenticate the messages (ai, bi) exchanged, at least the first step is carried out:
- transmitting a hash value (Hb) for all transmitted responses (bi), which was calculated by the second device (B), from the second device (B) to the first device (A),
if the comparison of the received hash value (Ha) for all transmitted requests (ai) with the calculated hash value (Ha*) for all received requests (ai*) in the second device (B) results in a match,
- receiving the transmitted hash value (Hb) in the first device (A),
- comparing the received hash value (Hb) for all transmitted responses (bi) with a calculated hash value (Hb*) for all received responses (bi*) in the first device (A), and/or
- determining that the authentication has been successfully completed,
if the comparison of the received hash value (Hb) for all transmitted responses (bi) with the calculated hash value (Hb*) for all received responses (bi*) results in a match.

13. Computer program product comprising instructions which, during execution, in particular of the computer program, by a processor (cu), cause the processor (cu) to carry out the method according to one of the preceding claims.

14. Network (N) for a vehicle (100), comprising at least two devices (A, B),
wherein at least one device of the at least two devices (A, B) has the following elements:
a memory unit (mu) in which a computer program is stored, and a processor (cu) configured such that the processor (cu) carries out the method according to one of the preceding Claims 1 to 12 during execution of the computer program.

15. Vehicle (100) having a network (N) according to the preceding claim.

## Revendications

1. Procédé permettant de synchroniser les horloges d'au moins deux appareils (A, B) dans un réseau distribué (N) d'un véhicule (100), comprenant les étapes suivantes consistant à :
- établir une communication non cryptée (K1) entre les au moins deux appareils (A, B) afin de déterminer une différence de temps (dt) entre les horloges des deux appareils (A, B),
- échanger des messages (ai, bi) entre les au moins deux appareils (A, B) par l'intermédiaire de la communication non cryptée (K1),
- déterminer une différence de temps (dt) entre les horloges des au moins deux appareils (A, B) à l'aide des messages (ai, bi),
- établir une communication cryptée (K2) entre les au moins deux appareils (A, B) afin d'authentifier l'échange de messages (ai, bi),
- authentifier les messages (ai, bi) qui ont été utilisés pour déterminer la différence de temps (dt),
- utiliser la différence de temps (dt) déterminée si l'authentification de messages (ai, bi) échangés a été achevée avec succès.

2. Procédé selon la revendication 1, **caractérisé en ce que**
la différence de temps (dt) calculée est rejetée si l'authentification a échoué,
et/ou le procédé est redémarré si l'authentification a échoué.

3. Procédé selon l'une quelconque des revendications précédentes, **caractérisé en ce que**
le procédé est exécuté de manière périodique et/ou régulière,
et/ou le procédé peut être démarré manuellement à la demande d'un utilisateur du véhicule (100),
et/ou le procédé est lancé automatiquement par celui des au moins deux appareils (A, B) qui est actif et/ou activé en premier.

4. Procédé selon l'une quelconque des revendications précédentes, **caractérisé en ce que**
le procédé est exécuté pour synchroniser les horloges de plus de deux appareils (A, B),
dans lequel parmi les plus de deux appareils (A, B) on sélectionne un appareil de commande central qui pilote la synchronisation de toutes les horloges,
et/ou dans lequel, pour respectivement une paire des plus de deux appareils (A, B), respectivement un appareil de commande central qui pilote la synchronisation est sélectionné.

5. Procédé selon l'une quelconque des revendications précédentes, **caractérisé en ce que**
le procédé permettant de synchroniser les horloges est exécuté par les appareils (A, B) qui sont intégrés dans le véhicule (100) et/ou couplés au réseau distribué (N) du véhicule (100) par un utilisateur,
et/ou le procédé permettant de synchroniser les horloges est exécuté par les appareils (A, B) qui sont utilisés pour une fonction de véhicule souhaitée.

6. Procédé selon l'une quelconque des revendications précédentes, **caractérisé en ce que**
la communication non cryptée (K1) est effectuée de manière filaire et/ou sans fil,
et/ou la communication cryptée (K2) est effectuée à l'aide d'un protocole de cryptage pour la transmission de données sûre.

7. Procédé selon l'une quelconque des revendications précédentes, **caractérisé en ce que**
les messages (ai, bi) dans les au moins deux appareils (A, B) sont stockés dans une mémoire commune ou dans respectivement deux mémoires différentes pour des messages envoyés (ai, bi) et/ou des messages reçus (ai*, bi*),
et/ou les messages (ai, bi) sont munis d'indicateurs.

8. Procédé selon l'une quelconque des revendications précédentes,
**caractérisé en ce que** pour l'authentification des messages (ai, bi) qui ont été utilisés pour établir la différence de temps (dt), en particulier qui ont été échangés pour calculer la différence de temps (dt), des valeurs de hachage (Ha, Ha*, Hb, Hb*) pour les messages envoyés (ai, bi) et/ou les messages reçus (ai*, bi*) sont comparées au niveau des au moins deux appareils (A, B).

9. Procédé selon l'une quelconque des revendications précédentes,
**caractérisé en ce que** chaque appareil des au moins deux appareils (A, B) mappe tous les messages envoyés (ai, bi) et tous les messages reçus (ai*, bi*) sur une valeur de hachage commune (HA, HB) ou sur deux valeurs de hachage séparées (Ha, Ha*, Hb, Hb*).

10. Procédé selon l'une quelconque des revendications précédentes,
**caractérisé en ce que** pour l'authentification des messages utilisés (ai, bi) au moins la première étape est exécutée :
- envoyer une valeur de hachage commune (HA) pour tous les messages envoyés (ai, bi) et tous les messages reçus (ai,*, bi*) d'au moins un appareil à un autre appareil des au moins deux appareils (A, B),
- comparer la valeur de hachage commune (HA) reçue avec une valeur de hachage commune calculée (HB) pour tous les messages reçus (ai, *, bi*) et tous les messages envoyés (ai, bi) au niveau de l'autre appareil, et/ou
- constater que l'authentification a été achevée avec succès si la comparaison de la valeur de hachage commune (HA) reçue coïncide avec une valeur de hachage commune (HB) calculée au niveau de l'autre appareil.

11. Procédé selon l'une quelconque des revendications 1 à 9,
**caractérisé en ce que** pour l'authentification des messages utilisés (ai, bi) au moins la première étape est exécutée :
- envoyer une valeur de hachage (Ha) pour toutes les demandes envoyées (ai), qui a été calculée par le premier appareil (A), d'un premier appareil (A) à un deuxième appareil (B) des au moins deux appareils (A, B) ,
- recevoir la valeur de hachage envoyée (Ha) au niveau du deuxième appareil (B), et/ou
- comparer la valeur de hachage (Ha) reçue pour toutes les demandes envoyées (ai) avec une valeur de hachage (Ha*) calculée pour toutes les demandes reçues (ai*) au niveau du deuxième appareil (B).

12. Procédé selon la revendication précédente, **caractérisé en ce que** pour l'authentification des messages échangés (ai, bi) au moins la première étape est exécutée :
- envoyer une valeur de hachage (Hb) pour toutes les réponses envoyées (bi), qui a été calculée par le deuxième appareil (B), du deuxième appareil (B) au premier appareil (A),
si la comparaison de la valeur de hachage (Ha) reçue pour toutes les demandes envoyées (ai) coïncide avec la valeur de hachage (Ha*) calculée pour toutes les demandes (ai*) reçues au niveau du deuxième appareil (B),
- recevoir la valeur de hachage (Hb) envoyée au niveau du premier appareil (A),
- comparer la valeur de hachage reçue (Hb) pour toutes les réponses envoyées (bi) avec une valeur de hachage calculée (Hb*) pour toutes les réponses reçues (bi*) au niveau du premier appareil (A), et/ou
- constater que l'authentification a été achevée avec succès si la comparaison de la valeur de hachage (Hb) reçue pour toutes les réponses (bi) envoyées coïncide avec la valeur de hachage (Hb*) calculée pour toutes les réponses (bi*) reçues.

13. Produit de programme informatique, comprenant des instructions qui, lors de l'exécution en particulier du programme informatique par un processeur (cu), font que le processeur (cu) exécute le procédé selon l'une quelconque des revendications précédentes.

14. Réseau (N) pour un véhicule (100), comprenant au moins deux appareils (A, B), dans lequel au moins un appareil des au moins deux appareils (A, B) présente les éléments suivants :
une unité de mémoire (mu) dans laquelle est mémorisé un programme informatique,
et un processeur (cu) qui est configuré de telle sorte que le processeur (cu) exécute le procédé selon l'une quelconque des revendications précédentes 1 à 12 lors de l'exécution du programme informatique.

15. Véhicule (100) comprenant un réseau (N) selon la revendication précédente.
